Europäisches Patentamt

**European Patent Office**

**Office européen des brevets**

(11) Publication number: **0 185 827**
**A1**

## (12) EUROPEAN PATENT APPLICATION

(21) Application number: **84402666.6**

(22) Date of filing: **20.12.84**

(51) Int. Cl.⁴: **B 01 D 19/00**
**E 21 B 21/06, E 21 B 49/00**

(43) Date of publication of application:
**02.07.86 Bulletin 86/27**

(84) Designated Contracting States:
**DE FR GB NL**

(71) Applicant: **SCHLUMBERGER TECHNOLOGY CORPORATION**
**5000 Gulf Freeway**
**Houston Texas 77023(US)**

(72) Inventor: **Crownover, Donald J.**
**7919 Picador Drive**
**Houston Texas 77083(US)**

(74) Representative: **Chareyron, Lucien et al,**
**Schlumberger Limited Service Brevets c/o Giers 12, place des Etats Unis B.P. 121**
**F-92124 Montrouge Cédex(FR)**

(54) **Aerated mud centrifuge.**

(57) A method and apparatus is disclosed for separating gas entrained in drilling fluid, such as drilling mud, returning to the surface after exposure to formation conditions during the drilling of a well. A carrier gas (16), such as air, is mixed with the drilling fluid (14) which is then agitated with the fluid by a counterflow force applied by a first impeller (12) to produce very small bubbles in order to widely scatter the carrier gas and minimize the length of the diffusion path for dissolved or undissolved gases into the carrier gas. A second impeller (21) causes the carrier gas to move towards the center of the chamber and the heavier mud to move towards the walls. The carrier gas is then separated from the mud for analysis.

FIG. 2

EP 0 185 827 A1

AERATED MUD CENTRIFUGE

DESCRIPTION

1. Technical Field

This invention relates generally to means for separating gases of interest for the purpose of analysis from well drilling fluid being returned to the surface.

2. Background of Invention

In the drilling of a well, quantities of drilling fluid or drilling mud are pumped down through the drill string to be discharged through suitable apertures in the drill bit. This drilling fluid carries the drill cuttings to the surface and will contain minute quantities of oil and gas which become entrained in the mud as the drill bit passes through hydrocarbon formations. It is important in drilling a well, not only for determining lithological information but also from a safety standpoint, to be aware of the character of formations being traversed by a well bore during the course of drilling. Accordingly, there is carried out, on almost a routine basis, an operation commonly referred to as "mud logging" in which, among other things, analyses are conducted through the use of suitable gas analyzers to determine gaseous components entrained in the drilling mud being returned to the surface. In order to properly conduct a mud logging service and to provide accurate indications of gas contents in the returning drilling mud, it is necessary to separate the gas entrained in the mud and transport it to a suitable station for analysis.

A number of techniques and systems have been proposed for separating gas entrained in the drilling mud. One such system is described in U. S. Patent 2,704,658 wherein an open-ended cylinder is placed within a mud pit and returning drilling mud is drawn up into the chamber and agitated for the purpose of separating gas samples entrained in the mud. In the described embodiment, the return mud flows through a ditch within which the open-ended chamber is partially submerged and reliance is had entirely upon agitation of whatever drilling mud passes by the chamber.

Another apparatus for separating entrained gas is described in U. S. Patent 2,514,690 where the returns from the drilling operation are cuttings and efforts are made to release gas contained in the cuttings. In the system described, a predetermined amount of cuttings is collected and placed in a container having water therein and the container is closed to trap air above the water. The air in the container is removed and circulated around a closed path which initially contains air and leads back to the container. The circulating and recirculating air causes gas to be released from the cuttings for reasons described in the patent which include a possible theoretical selective affinity of the cuttings for air which would cause the air to permeate the cuttings and displace the gas therefrom. The circulation and recirculation of the air and gas mixture is continued until a maximum gas reading is secured by means of a suitable detector or the operator determines that there is insufficient gas present for worthwhile analysis.

## DISCLOSURE OF THE INVENTION

The present invention relates to an improved method and apparatus for separating gas from drilling fluid being returned to the surface of the earth after exposure to formation conditions during the drilling of the well. In carrying out the method, a stream of drilling fluid returns is continuously flowed into and out of a treatment area. A carrier gas is also continuously introduced into the treatment area. The carrier gas, as well as the stream of drilling fluid, is agitated in the treatment area to maximize the transport of gases of interest from the drilling fluid to the carrier gas to form a gaseous mixture. The gaseous mixture is then transported to equipment at an analysis station for determination of the presence or absence, as well as the identification of gases of interest in the gaseous mixture. The drilling fluid is returned from the treatment area to a drilling fluid collection area. Where the drilling fluid is a drilling mud, the collection area is termed a "mud pit".

For all practical purposes, the carrier gas should possess the following characteristics: (1) not significantly soluble in the drilling fluid; (2) high solubility for the gases of interest; and (3) inert to the analyses processes conducted for the gases of interest. A carrier gas selected from a class consisting of air and nitrogen meets these characteristics. For economy purposes, air is preferred as the carrier gas.

The separation of the gas of interest is enhanced by applying a force in the treatment area in a direction opposite to the path taken by the flow of drilling fluid and carrier gas to widely disperse the carrier gas in the drilling fluid stream as very small bubbles in order to widely scatter the carrier gas and minimize the length of the diffusion path for the species of gas of interest and to provide a large surface area for migration of the species from the drilling fluid to the carrier gas bubbles.

It is a general object of the present invention to provide an improved method and apparatus for removal of gas in the returning drilling fluid from a well bore.

This and other objects are attained, in accordance with one aspect of the invention, by a method of separating gas from drilling fluid being returned to the surface of the earth after exposure to formation conditions during the drilling of a well comprising the steps of: (a) continuously introducing a stream of untreated drilling fluid returns into and out of a treatment area; (b) continuously introducing a carrier gas into the treatment area; (c) agitating the carrier gas and stream of drilling fluid in the treatment area to widely disperse the carrier gas in the drilling fluid stream to provide a short diffusion path and a large surface area for the transport of gas of interest from the drilling fluid to the carrier gas to form a gaseous mixture; and (d) removing the gaseous mixture from the treatment area for use in the analysis process.

Another aspect of the invention includes apparatus for separating gas of interest from drilling fluid being returned to the surface of the earth after exposure to formation conditions during the drilling of a well comprising a chamber defining a treatment area, means for continuously introducing an untreated stream of drilling fluid into and out of the treatment area; means for concomitantly introducing a continuous flow of a carrier gas into the treatment area, means in the treatment area for agitating the carrier gas and the drilling fluid to increase the transport of gas of interest from the drilling fluid to the carrier gas to form a gaseous mixture, and means for removing the gaseous mixture from the treatment area for use in an analysis process.

A further aspect of the invention is attained by apparatus for separating gas to be analyzed from drilling mud being returned to the surface of the earth after exposure to formation conditions during the drilling of a well comprising a chamber having a base portion and a top portion; means for introducing into said chamber by way of said base portion a sample of drilling mud being returned to the earth's surface; means for introducing into said chamber by way of said base portion a stream of carrier gas, a first impeller located in the chamber adjacent said base portion thereof having blades canted at an angle such that, upon rotation of the impeller, a downward force and a centrifugal force are applied against the introduced drilling mud and carrier gas to mix the carrier gas with the drilling mud; a second impeller located in the chamber above the first impeller and having blades which, upon rotation of the impeller, introduce additional centrifugal force to the mixture of mud and carrier gas to cause the carrier gas and gas separated from the mud to move to the center of said chamber as a mixture and cause the more dense mud to move toward outer walls of said chamber; means in the upper portion of said chamber for removing the mixture of gases from said chamber for use at an analysis station; and means in said chamber for exhausting the drilling mud from said chamber.

## BRIEF DESCRIPTION OF THE DRAWINGS

FIG. 1 is a perspective view of the aerated mud centrifuge of the present invention;

FIG. 2 is a cross section of an aerated mud centrifuge of Fig. 1 having operational characteristics making it uniquely suited to carry out the method of the present invention; and

FIG. 3 is a top plan view of the bottom portion or plate of the centrifuge of Fig. 2 and illustrates ingress ports for drilling fluid and the carrier gas, as well as exhaust ports for drilling fluid following treatment within the centrifuge.

## BEST MODES FOR CARRYING OUT THE INVENTION

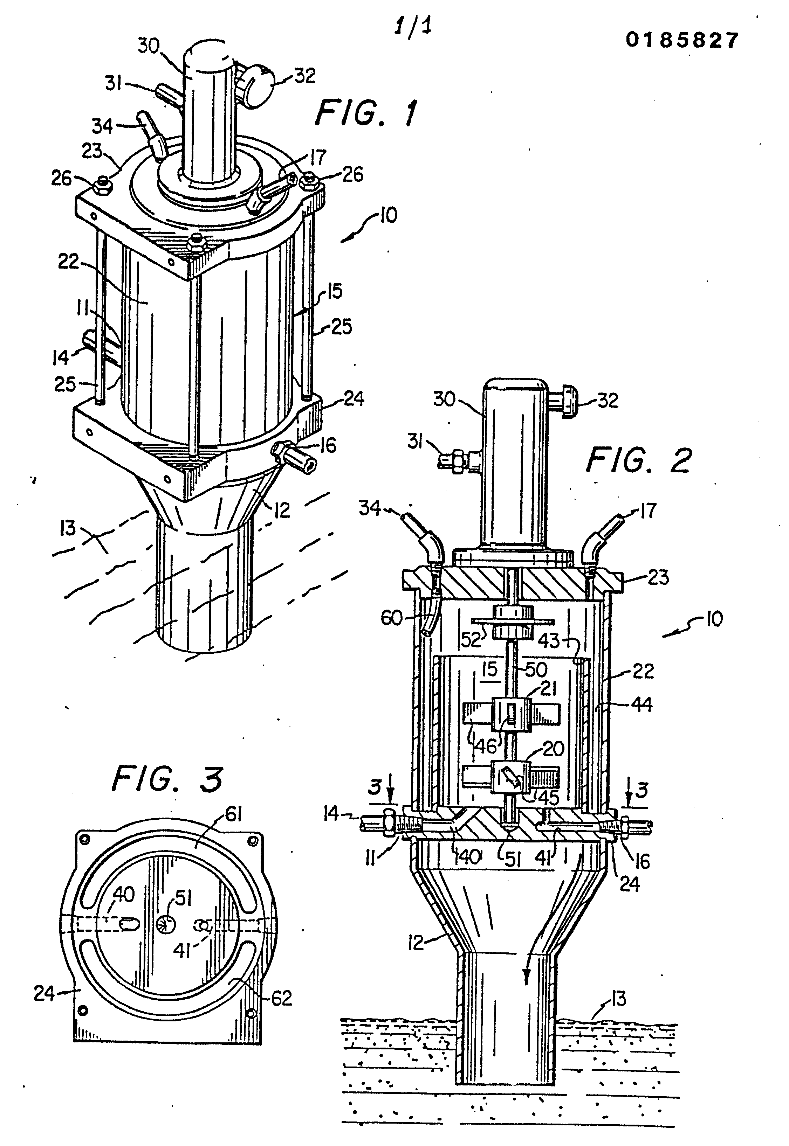

Referring now to Fig. 1 where there is illustrated an aerated mud centrifuge 10 of the present invention having an inlet connection 11 for receiving a continuous flow of drilling mud to be treated. Following treatment in the centrifuge 10, the mud is returned by way of conduit 12 to the mud pit for recirculation in a manner well known in the art of drilling wells. The inlet 11 is connected by way of a flow line 14 to the output of a pump (not shown) whose intake port is mounted on a float buoyantly supported in the mid pit. The float allows the pump to pick up mud samples from a point just below the surface of the mud so as to acquire the least dense sample with the least solids content. The intake of the float preferably has a screen with a large surface so as to separate solids from the mud but maintain a minimum pressure differential across the screen thereby avoiding the retention of solids on the face of the screen.

The function of the aerated mud centrifuge 10 is to efficiently extract gas species from the drilling mud that has been injected by way of inlet 11. As mud is continuously pumped into chamber 15, fresh air is also continuously pumped into the chamber by way of inlet 16 and mixed with the mud by impellers 20 and 21. This action provides for the agitation of the carrier gas which, preferably, is air and the stream of drilling mud to maximize the transport of a gas of interest from the drilling mud to the carrier gas to form a gaseous mixture. The gaseous mixture is removed from the chamber by way of a conduit 17 for use by a suitable analytic apparatus, and the treated mud is returned from the chamber 15 to the mud pit by way of conduit 12.

The agitation and mixing of the air and samples of drilling mud entering the chamber 15 is enhanced by applying a force in a direction opposite to the path taken by the flowing drilling mud and carrier gas. This is performed by impeller 20 (Fig. 2) whose action widely disperses the introduced carrier gas in the mud stream as very small bubbles in order to widely scatter the carrier gas and minimize the length of the diffusion path for dissolved and/or undissolved gas species of interest and also to provide a large surface area for migration of the gas species from the mud to the carrier gas bubbles.

In addition to the foregoing, an additional centrifugal force is generated by another impeller 21 (Fig. 2) which, when applied to the mixture of drilling mud and carrier gas, increases the density gradient in the horizontal plane to cause the gas bubbles to migrate along the density gradient from the outside toward the center and cause the heavier mud to be forced outwardly.

The introduction of carrier gas and drilling fluid is shown and described in the preferred embodiment as taking place at diametric points in the base of a cylindrical container. It is to be understood, however, that the container may be of any desired effective shape, for example, spherical, and that the introduction of the carrier gas and drilling mud may take place at points other than the base of the container.

By reason of the agitation brought about with the impellers 20 and 21, the injected air becomes widely dispersed in the mud as very small bubbles. The sum of these bubbles has a very large surface area within the mud in the centrifuge 10. By virtue of having a large surface area and being widely scattered, the dispersed air bubbles increase the probability for separation of the gas species from the mud by minimizing the length of the diffusion paths and maximizing the area of the boundary or interface through which the species can migrate. This migration is highly favored because the species are not very soluble in mud but are very soluble in air. The air bubbles then become vehicles for transporting the gas species to the surface of the mud for separation. That transport occurs as the mud is swirled in the centrifuge about the central vortex. As the mud is propelled by the impellers, it rotates in the horizontal and vertical planes. The rotation in the horizontal plane causes a centrifugal action which has two important functions. The air bubbles will migrate along the density gradient from the outside higher pressure region toward the central lower pressure region and the heaviest mud, that is, the mud with the least amount of air/gas bubbles, will be centrifugally exhausted from the centrifuge.

As the air/gas bubbles approach the central vortex, they will be subjected to a large pressure drop which will cause them to effervesce from the mud into the head space. This completes the separation and the sample may then be transported to a gas analysis station by way of suitable means such as conduit 17.

It should be noted that the centrifuge operates at a positive pressure as opposed to the traditional negative pressure gas traps. This principle leads to a relatively simple design and the avoidance of a problem of drawing drilling mud up into the sample line or conduit 17.

The chamber or treatment area 15 is defined by an outer cylinder 22 secured between an upper portion or top plate 23 and a lower portion or bottom plate 24 by way of spaced stays 25. These stays 25 are threadedly connected to the bottom plate 24. The upper portions of the stays 25 pass through suitable apertures in the top plate 23 and have threaded ends which receive securing nuts 26 to apply tension to the stays 25 and bring the top plate, bottom plate and outer cylinder 22 together in an airtight relationship utilizing suitable sealing means such as a silicone material.

Mounted to the top plate 23 is a prime mover 30 which may be an electric motor in an explosion proof case or, preferably, an air motor. In either case, external power is applied to the motor 30 by way of conduit 31. In the instance of utilizing an air motor, a muffler 32 will be provided.

For water-based drilling fluids, rinse water to be used in the method of the present invention may optionally be applied through the top plate 23 by way of conduit 34 attached at one end to a source of rinse water.

Referring now to Fig. 2 for further details of the aerated mud centrifuge 10, there are illustrated passageways 40 and 41, respectively, associated with the mud inlet connection 11 and the air inlet connection 16 for transmitting the drilling mud and the air to be merged in the treatment area which includes inner cylinder 43. The lower portion of the inner cylinder 43 is secured to the bottom plate 24. The upper end of the inner cylinder terminates short of the base of the top plate 23. The inner cylinder 43, together with the outer cylinder 22, form an annulus 44 by way of which the drilling mud will be expelled from the chamber following treatment to remove gases of interest.

The forces for mixing the drilling mud and the air are applied by the impeller 20 comprised of a plurality of blades 45 canted at an angle such that, upon rotation of the impeller 20, both a downward force component and a centrifugal force component will be applied to the drilling mud and air entering the treatment area and produce in the mixture a wide dispersion of the injected air throughout the mud as very small bubbles.

As the mixture of drilling mud and air bubbles proceeds vertically through the treatment area 15, it is acted upon by impeller 21 comprised of a plurality of spaced blades 46, which imparts additional centrifugal action to cause the air bubbles, together with the gas dissolved therein, to migrate along the density gradient from the outside of the treatment area toward the center. Simultaneously, the heaviest drilling mud, i.e., that with the least amount of air/gas bubbles, will be centrifugally moved up and over the upper edge of the inner cylinder 43 into the annulus 44.

As the air/gas bubbles approach the central vortex, they will be subjected to a large pressure gradient which will cause them to effervesce from the mud into thje head space above the inner cylinder and pass out of the treatment area by way of conduit 17 to suitable gas analysis equipment.

The impellers 20 and 21 are mounted on a common shaft 50 axially aligned with cylinder 43. The lower end of the shaft 50 rotates in a foot bearing 51 located in the bottom plate 24. Also mounted on the common shaft 50 is another impeller in the form of circular plate 52 functionally serving as a "mud slinger" to prevent mud from climbing up the common shaft 50 and accumulating at the top of the treatment area adjacent the base of the top plate 23. The rotation of the circular plate 52 applies forces which sling the mud against the inner surface of the outer cylinder 22. The mud flows down the inner surface into the annulus 44 for transport out of the centrifuge.

Rinse water is provided to prevent mud "cake-up" within the outer cylinder 22. The rinse water enters the centrifuge from conduit 34 and by way of a suitable feed-through in the top plate is directed by tubing 60 into the annulus 44 formed between the inner cylinder 43 and the outer cylinder 22.

The treated mud is expelled from the annulus 44 through exhaust ports 61 and 62 formed in the base of the bottom plate 24, as shown in Fig. 3. The exhaust ports 61 and 62 are arcuate in shape and serve as passageways between the annulus 44 and the conduit 12 communicating with the mud pit.

Although the present invention has been described in connection with preferred embodiments, it is to be understood that modifications and variations may be resorted to without departing from the spirit and scope of the invention, as well appreciated by those skilled in the art. All such modifications and variations are intended to come within the scope of the invention as defined in the appended claims.

What is claimed is:

1. A method of separating gas from drilling fluid being returned to the surface of the earth after exposure to formation conditions during the drilling of a well characterized by the steps of:

(a) continuously introducing a stream of untreated drilling fluid returns into and out of a treatment area;

(b) continuously introducing a carrier gas into the treatment area;

(c) agitating the carrier gas and stream of drilling fluid in the treatment area to widely disperse the carrier gas in the drilling fluid stream to provide a short diffusion path and a large surface area for the transport of gas of interest from the drilling fluid to the carrier gas to form a gaseous mixture; and

(d) removing the gaseous mixture from the treatment area for use in the analysis process.

2. The method of claim 1 characterized by the step of applying centrifugal force to the drilling fluid to remove the drilling fluid from the treatment area after transport of the gas of interest from the drilling fluid to the carrier gas.

3. The method of claim 1 or 2 characterized in that the introductions of the drilling fluid and the carrier gas take place at diametric points in the bottom of the treatment area.

4. The method of claim 1, 2 or 3 characterized in that the carrier gas is selected from the class consisting of air and nitrogen.

5. The method of any one of claims 1-4 characterized in that the step of agitating includes applying a force in a direction opposite to that path taken by the flow of drilling fluid and carrier gas to widely disperse the introduced carrier gas in the drilling fluid stream as very small bubbles in order to widely scatter the carrier gas and minimize the length of the diffusion path for species of gas of interest and to provide a large surface area for migration of the species from the drilling fluid to the carrier gas bubbles.

6. The method of claim 5 characterized in that the step of agitation further includes the step of applying centrifugal force to the mixture of drilling fluid and carrier gas to create a density gradient in the horizontal plane to cause the carrier gas bubbles to migrate along the density gradient from the outside toward the center and cause the heavier drilling fluid to be forced from the center.

7. Apparatus for separating gas of interest from drilling fluid being returned to the surface of the earth after exposure to formation conditions during the drilling of a well characterized by a chamber defining a treatment area, means for continuously introducing an untreated stream of drilling fluid into and out of the treatment area; means for concomitantly introducing a continuous flow of a carrier gas into the treatment area, means in the treatment area for agitating the carrier gas and the drilling fluid to increase the transport of gas of interest from the drilling fluid to the carrier gas to form a gaseous mixture, and means for removing the gaseous mixture from the treatment area for use in an analysis process.

8.    The apparatus of claim 7 characterized in that said means for introducing said drilling fluid and said means for introducing said carrier gas are located diametrically to one another at a bottom portion of the treatment area.

9.    Apparatus for separating gas to be analyzed from drilling mud being returned to the surface of the earth after exposure to formation conditions during the drilling of a well characterized by a chamber having a base portion and a top portion; means for introducing into said chamber by way of said base portion a sample of drilling mud being returned to the earth's surface; means for introducing into said chamber by way of said base portion a stream of carrier gas, a first impeller located in the chamber adjacent said base portion thereof having blades canted at an angle such that, upon rotation of the impeller, a downward force and a centrifugal force are applied against the introduced drilling mud and carrier gas to mix the carrier gas with the drilling mud; a second impeller located in the chamber above the first impeller and having blades which, upon rotation of the impeller, introduce additional centrifugal force to the mixture of mud and carrier gas to cause the carrier gas and gas separated from the mud to move to the center of said chamber as a mixture and cause the more dense mud to move toward outer walls of said chamber; means in the upper portion of said chamber for removing the mixture of gases from said chamber for use at an analysis station; and means in said chamber for exhausting the drilling mud from said chamber.

10. The apparatus of claim 9 characterized by inner cylindrical wall structure forming an annulus with the inner wall surface of said chamber, and means for introducing rinse water through said top portion of said chamber into said annulus.

11. The apparatus of claim 9 or 10 characterized by an exhaust port for the drilling mud in communication with said annulus and located at an end of said chamber.

12. The apparatus of claim 9, 10 or 11 characterized in that said first and second impellers are located on a common shaft extending from said base portion through said top portion of said chamber, and means located outside said chamber and mounted to said top portion of said chamber for rotating said shaft.

13. The apparatus of claim 12 characterized in that said shaft rotating means is an air motor.

14. The apparatus of claim 12 or 13 characterized in that a third impeller is mounted to said common shaft above said second impeller to sling any drilling mud moving up said common shaft and thereby prevent the accumulation of any drilling mud near said top portion of said chamber.

1/1

0185827

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | US-A-2 294 827 (R.B. BOOTH) <br> * Column 1, line 50 - column 2, line 50; claims; figure * | 1,7 | B 01 D 19/00 <br> E 21 B 21/06 <br> E 21 B 49/00 |
| A | | 2,4-6 | |
| Y,D | US-A-2 704 658 (K.J. GORDON) <br> * Whole document * | 1,7 | |
| A | | 8 | |
| A | BE-A- 884 216 (J.H. HAEGEMAN) <br> * Page 2, line 13 - page 3, line 23; claims; figure * | 1,4,7 | |
| A | US-A-4 358 298 (E.G. RATCLIFF) <br> * Column 5, lines 41,42 * | 7 | TECHNICAL FIELDS SEARCHED (Int. Cl.4) <br><br> B 01 D <br> B 01 F <br> E 21 B |

The present search report has been drawn up for all claims

| Place of search | Date of completion of the search | Examiner |
|---|---|---|
| THE HAGUE | 29-08-1985 | VAN BELLEGHEM W.R. |

EPO Form 1503. 03.82